# EUROPÄISCHE PATENTSCHRIFT

(11) **EP 2 113 702 B1**
(45) Veröffentlichungstag und Bekanntmachung des Hinweises auf die Patenterteilung: **03.10.2012**
(21) Anmeldenummer: 09005667.2
(22) Anmeldetag: 22.04.2009
(51) Int. Cl.: F16L 21/00, F16L 33/08, F16J 15/06

(54) **Kupplung zum Verbinden zweier Rohrenden mit sekundärer Quelldichtung**
Coupling for connecting two ends of a pipe with secondary source seal
Embrayage destiné à la liaison de deux extrémités de tuyaux, doté d'une étanchéité de source secondaire

(30) Priorität: 29.04.2008 DE 202008005936 U
(43) Veröffentlichungstag der Anmeldung: 04.11.2009
(73) Patentinhaber: PT-POLY-TEC GmbH Vertrieb und Herstellung von Dichtungssystemen, 65629 Niederneisen (DE)
(72) Erfinder: Mehl, Helmut, 35781 Weilburg (DE)
(74) Vertreter: Blumbach - Zinngrebe

(56) Entgegenhaltungen:
- WO-A1-03/036139
- CH-A5- 643 644
- US-A- 5 431 458

## Beschreibung

Die Erfindung bezieht sich auf eine Kupplung in Form einer Muffe zum abdichtenden Verbinden zweier Rohrenden.

Solche Kupplungen sind dafür vorgesehen, Rohrverbindungen zwischen Rohren herzustellen, deren zu verbindende Enden rundzylindrisch ausgebildet sind. Die Rohre können aus gleichem Material oder unterschiedlichem Material bestehen, wobei Beton-/Steinzeugrohre, Guss oder die Kunststoffe GFK, PP, PE-HD oder PVC in Betracht kommen. Es können auch Rohre mit unterschiedlichem Außendurchmesser miteinander verbunden werden, wobei dann eine Reduktionskupplung verwendet wird. Durch entsprechend festes Anziehen der Spannbänder kann erreicht werden, dass die Verbindung auch gegenüber Über- oder Unterdruck dicht bleibt. Dies setzt aber voraus, dass die Kupplung sehr sorgfältig mit genau defeniertem Drehmoment eingebaut wird und dass es nicht zu Bodensenkungen kommt, welche übermäßige Quer- und/oder Scherkräfte in der Kupplung an den Rohrenden erzeugen.

Bei einer bekannten Kupplung zum abdichtenden Verbinden zweier Rohrenden (CH 643 644) werden die beiden stumpf aneinander stoßenden Rohrenden mit einem gummielastischen Verbindungselement zusammengehalten, dessen Enden manschettenartig, mit sägezahnförmigen Profilen gestaltet sind und auf den Rohrenden aufliegen. Die Kupplung weist auf ihrer äußeren Umfangsfläche zwei flache ringförmige Nuten auf, in denen Klemmbriden aufgenommen werden, die zum Festspannen der Kupplungen und Verformen der Sägezahnprofile dienen.

Aus US 5,431,458 ist eine Kupplung mit elastomerer Dichtung und äußerer Stahlverstärkung bekannt, die durch vier Klemmbänder an den Rohrenden festgespannt wird.

Die WO 03/036139 A1 offenbart ein selbstdichtendes System für Rohrverbindungen, insbesondere Rohrmuffen, bei denen das Dichtungsmaterial aus einer insgesamt quellfähigen, homogenen Elastomermischung besteht, wobei der quellfähige Bestandteil in der Elastomermatrix eingebettet ist.

Der Erfindung liegt die Aufgabe zugrunde, eine Kupplung der angegebenen Art zu schaffen, bei der ein größerer Toleranzspielraum und Sicherheitspuffer bei der Installation und dem Betrieb eingehalten werden kann.

Die Lösung der Erfindung ist durch einen Gegenstand mit den Merkmalen des anhängenden Schutzanspruchs 1 gegeben.

Die gestellte Aufgabe wird dadurch gelöst, dass innerhalb der Muffe, parallel zu dort vorhandenen primären Dichtungen, insbesondere Presslippendichtungen, je eine Nut zur Aufnahme einer Quelldichtung vorgesehen ist.

Die Nut wird vorzugsweise im äußeren Drittel des Muffeninneren angebracht, nämlich in der Nähe der dort ebenfalls vorhandenen Primärdichtungen, also insbesondere der Presslippendichtungen, und vorzugsweise im Bereich des äußeren Spannbandes. Die Quelldichtung enthält mit Wasser aufquellendes, hydrophiles Material, das auch als Absorber oder Superabsorber bezeichnet wird und das bei auftretender Feuchtigkeit Lücken zwischen Rohr und Muffenmantel ausfüllt und so abdichtet.

Es wird bevorzugt, Nuten mit Hinterschneidungen zu verwenden, um die Quelldichtung sicher innerhalb der Muffe zu halten.

Ein Ausführungsbeispiel der Erfindung wird anhand der Zeichnung beschrieben. Dabei zeigt:
- Fig. 1: eine Kupplung für Rohrenden gleichen Durchmessers und
- Fig. 2: verschiedene Ausführungsformen von Nuten zur Aufnahme der Quelldichtung.

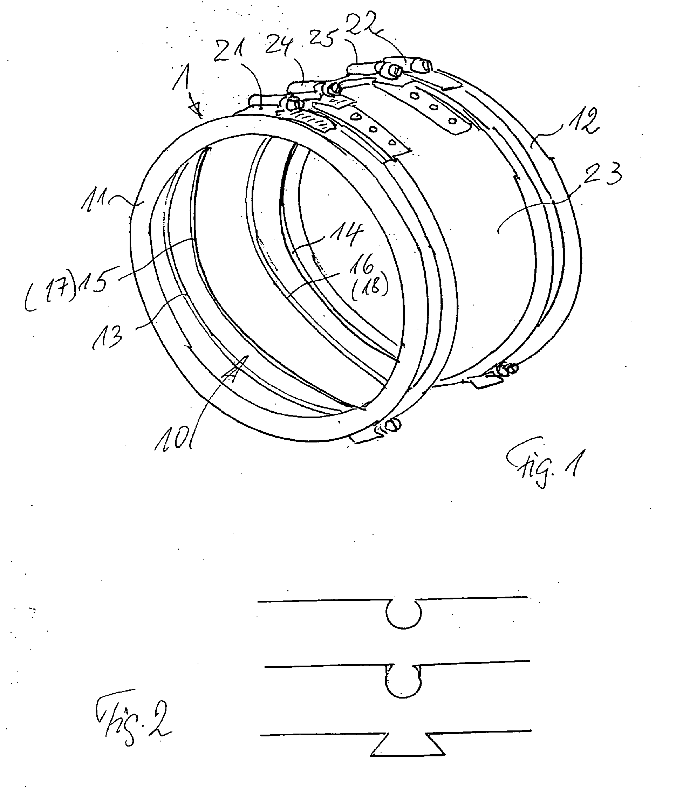

Fig. 1 zeigt eine Kupplung in Form einer Muffe aus Elastomer, beispielsweise aus EPDM. Der Muffenmantel 1 umschließt ein Muffeninneres 10 und weist ein erstes Muffenende 11 sowie ein zweites Muffenende 12 auf. Nahe des äußeren Randes des Muffenmantels sind im Muffeninneren 10 als primäre Dichtungen ein erster Bereich umlaufender Presslippendichtungen 13 und ein zweiter Bereich umlaufender Presslippendichtungen 14 vorgesehen. Parallel zu diesen primären Dichtungen, im dargestellten Beispiel parallel versetzt zu den Presslippendichtungen sind Nuten 15, 16 zur Aufnahme je einer Quelldichtung 17, 18 vorgesehen. Die Nuten 15, 16 sind vorzugsweise mit Hinterschnitt ausgebildet, wie dies in Fig. 2 angedeutet ist. Der Hinterschnitt braucht nicht durchgehend zu sein, es ist möglich, Hinterschnittstellen im Abstand voneinander entlang des Umfangs der jeweiligen Nut vorzusehen, wie dies in der mittleren Darstellung der Fig. 2 angedeutet ist.

Am äußeren Umfang des Muffenmantels sind schmale Spannbänder 21, 22 zum Beispiel aus Edelstahl, vorgesehen, die in flachen Nuten an der Außenseite des Muffenmantels geführt sind. Der mittlere Außenbereich des Muffenmantels ist als eine breite, flache Nut ausgebildet, die im dargestellten Ausführungsbeispiel von einem Scherband 23 eingenommen wird. Das Scherband 23 kann mit zwei randständigen Spannschlössern 24, 25 gespannt werden.

### Die Wirkungsweise der neuen Kupplung ist wie folgt:

Es wird je ein nicht dargestelltes Rohrende in das erste Muffenende 11 bzw. das zweite Muffenende 12 eingesteckt, und die Spannbänder 21 bzw. 22 werden mit einem vorgeschriebenen Drehmoment angezogen, um die notwendige Vorspannung auf den Muffenmantel aufzubringen. Dabei wird der Muffenmantel im Bereich seiner Enden 11, 12 gestaucht, was zur Anlage der umlaufenden Presslippendichtungen 13 bzw. 14 am Umfang der eingesteckten Rohrenden führt. Es entsteht so ein fortlaufender Leitungszug, der durch die Muffe abgedichtet wird.

Die Praxis hat gezeigt, dass beim Einbau der Rohrleitung es zu einer Erdabsenkung kommen kann, die dann zu einer Querverschiebung der Rohrenden führt, was häufig von einer Undichtigkeit begleitet wird. Wenn dann Feuchtigkeit zu den Quelldichtungen 15, 16 gelangt, füllen sich Spalten zwischen den Rohrenden und dem Muffenmantel mit dem Material der Quelldichtung auf und dichten mit der Zeit die Undichtigkeit ab.
Undichtigkeiten treten ebenfalls auf, wenn das vom Hersteller vorgeschriebene Drehmoment nicht erreicht wird.

Das breite Scherband 23 wird vor allem dann angewendet, wenn Erdbewegungen zu erwarten sind, oder unterschiedliche Rohrmaterialien, die sich in Wanddicke, Gewicht oder durch andere Materialeigenschaften unterscheiden, eingesetzt werden. Die Quelldichtungen stellen jedoch eine weitere Sicherheitsmaßnahme dar.

Die Kupplung kann auch als Übergangskupplung zwischen verschiedenen Rohrdurchmessern gestaltet sein. In diesem Fall besteht der Muffenmantel aus zwei Rohrkörpern und einer Übergangsstufe. Die Ausbildung der Übergangsmuffe an den Muffenenden entspricht der Ausführungsform nach Fig. 1. Bei der Übergangsstufe kann kein breites Scherband angewendet werden, weswegen man das Scherband durch zwei schmälere Spannbänder ersetzt im Vertrauen darauf, dass die Übergangsstufe ein erhöhtes Widerstandsmoment und eine erhöhte Scherkraftaufnahme gewährleistet.

Die primären Dichtungen können in abgewandelter, nicht dargestellter Ausführung auch als Doppellippendichtungen derart ausgebildet sein, dass diese Dichtungen mit oder ohne zusätzlicher Quelldichtung eingebaut werden können.

Ferner kann die Kupplung ergänzend oder alternativ im Bereich der zu verbindenden Rohrenden eine Paralleldichtung, welche im Stoß zwischen den Rohren angeordnet ist, mit eingebauter Quelldichtung besitzen.

Eine Nut zur Aufnahme einer zusätzlichen Quelldichtung kann somit auch parallel und innerhalb eines primären Dichtungsbereichs vorgesehen sein.

## Patentansprüche

1. Kupplung zum abdichtenden Verbinden zweier Rohrenden, umfassend:
eine Muffe aus Elastomer, die einen Muffenmantel (1) mit einem ersten Muffenende (11) zur Aufnahme des ersten Rohrendes und mit einem zweiten Muffenende (12) zur Aufnahme des zweiten Rohrendes aufweist, wobei jedes Muffenende (11, 12) mit Primärdichtungen, insbesondere umlaufenden Presslippendichtungen (13, 14), versehen ist,
je ein Spannband (21, 22) pro Muffenende (11, 12), um das jeweilige Rohrende in der Muffe einzuspannen,
**dadurch gekennzeichnet, dass** parallel zu den Primärdichtungen (13, 14) je eine Nut (15, 16) in denen je eine Quelldichtung (17, 18) aufgenommen ist, vorgesehen ist.

2. Kupplung nach Anspruch 1,
**dadurch gekennzeichnet, dass** die jeweiligen Primärdichtungen (13, 14) nahe des Randes des Muffeninneren (10) und die Nuten (15, 16) und die jeweiligen eingelegten Quelldichtungen (17, 18) innerhalb des jeweiligen äußeren Drittels des Muffeninneren (10) angeordnet sind.

3. Kupplung nach Anspruch 1 oder 2,
**dadurch gekennzeichnet, dass** die Nuten (15,16) hinterschnitten sind.

4. Kupplung nach einem der Ansprüche 1 bis 3,
**dadurch gekennzeichnet, dass** der Muffenmantel (1) insgesamt rundzylindrisch ist und an seiner Außenseite, benachbart den jeweiligen Muffenenden (11, 12), je eine flache Nut zur Aufnahme eines schmalen Spannbandes (21, 22) aufweist, wobei der mittlere Bereich des Muffenmantels (1) zur Aufnahme eines breiten Scherbandes (23) genutzt werden kann.

5. Kupplung nach einem der Ansprüche 1 bis 3,
**dadurch gekennzeichnet, dass** der Muffenmantel aus zwei Rohrkörpern und einer Übergangsstufe aufgebaut ist und dass benachbart der jeweiligen Muffenenden je eine Aufnahmenut zur Aufnahme eines schmalen Spannbandes vorgesehen ist.

6. Kupplung nach einem der Ansprüche 1 bis 5, **dadurch gekennzeichnet, dass** die jeweiligen Primärdichtungen als Doppellippendichtungen ausgebildet sind
und mit oder ohne zusätzliche Quelldichtung in die Muffe (1) eingebaut sind.

7. Kupplung nach einem der Ansprüche 1 bis 6, **dadurch gekennzeichnet, dass** die Kupplung im Stoß der zu verbindenden Rohrenden eine Paralleldichtung mit eingebauter Quelldichtung aufweist.

## Claims

1. Coupling for sealing connection of two pipe ends, comprising:
a sleeve of elastomer, which comprises a sleeve casing (1) with a first sleeve end (11) for receiving the first pipe end and with a second sleeve end (12) for receiving the second pipe end, wherein each sleeve end (11, 12) is provided with primary seals, in particular peripheral pressing lip seals (13, 14),
a respective tension strip (21, 22) per sleeve end (11, 12) to clamp the respective pipe end in the sleeve,
**characterised in that**, in parallel with the primary seals (13, 14), a respective groove (15, 16) is provided, in which a respective swelling seal (17, 18) is received.

2. Coupling as claimed in claim 1,
**characterised in that** the respective primary seals (13, 14) are disposed close to the edge of the inside (10) of the sleeve and the grooves (15, 16) and the respective inserted swelling seals (17, 18) are disposed inside the respective outer third of the inside (10) of the sleeve.

3. Coupling as claimed in claim 1 or 2,
**characterised in that** the grooves (15, 16) are undercut.

4. Coupling as claimed in any one of claims 1 to 3,
**characterised in that** the sleeve casing (1) as a whole is a round cylinder in shape and, on its outside, adjacent to the respective sleeve ends (11, 12), has a respective shallow groove for reception of a narrow tension strip (21, 22), wherein the middle region of the sleeve casing (1) can be used to receive a broad shear band (23).

5. Coupling as claimed in any one of claims 1 to 3,
**characterised in that** the sleeve casing is made up of two pipe bodies and a transition step and that, adjacent to the respective sleeve ends, a respective receiving groove for receiving a narrow tension strip is provided.

6. Coupling as claimed in any one of claims 1 to 5, **characterised in that** the respective primary seals are formed as double lip seals and are integrated into the sleeve (1) with or without an additional swelling seal.

7. Coupling as claimed in any one of claims 1 to 6, **characterised in that**, where the pipe ends to be connected abut, the coupling has a parallel seal with an integrated swelling seal.

## Revendications

1. Accouplement pour la liaison étanchéifiante de deux extrémités de tuyau, comprenant :
un manchon en élastomère, qui présente une enveloppe de manchon (1) avec une première extrémité de manchon (11) pour le logement de la première extrémité de tuyau et une seconde extrémité de manchon (12) pour le logement de la seconde extrémité de tuyau, chaque extrémité de manchon (11, 12) étant dotée de joints primaires, en particulier de joints à lèvre comprimée (13, 14) périphériques,
à chaque fois une bande de serrage (21, 22) par extrémité de manchon (11, 12), pour insérer l'extrémité de tuyau concernée dans le manchon,
**caractérisé en ce qu'**à chaque fois une rainure (15, 16), dans chacune desquelles est réceptionné un joint gonflant (17, 18), est prévue parallèlement aux joints primaires (13, 14).

2. Accouplement selon la revendication 1,
**caractérisé en ce que** les joints primaires (13, 14) respectifs sont disposés à proximité du bord de l'intérieur du manchon (10) et les rainures (15, 16) et les joints gonflants (17, 18) respectifs insérés sont disposés à l'intérieur du tiers extérieur respectif de l'intérieur du manchon (10).

3. Accouplement selon la revendication 1 ou 2, **caractérisé en ce que** les rainures (15, 16) sont contre-dépouillées.

4. Accouplement selon l'une des revendications 1 à 3, **caractérisé en ce que** l'enveloppe de manchon (1) est globalement ronde et cylindrique et présente sur son côté extérieur, à proximité de chacune des extrémités de manchon respectives (11, 12), une rainure plate pour le logement d'une bande de serrage (21, 22) étroite, la zone centrale de l'enveloppe de manchon (1) pouvant être utilisée pour le logement d'une bande de cisaillement (23) large.

5. Accouplement selon l'une des revendications 1 à 3, **caractérisé en ce que** l'enveloppe de manchon est constituée de deux corps de tuyau et d'un niveau de transition et **en ce qu'**une rainure de logement est prévue à proximité des extrémités de manchon respectives pour le logement d'une bande de serrage étroite.

6. Accouplement selon l'une des revendications 1 à 5, **caractérisé en ce que** les joints primaires respectifs sont conçus sous forme de joints à lèvre double et sont intégrés avec ou sans joint gonflant supplémentaire dans le manchon (1).

7. Accouplement selon l'une des revendications 1 à 6, **caractérisé en ce que** l'accouplement présente dans la jointure des extrémités de tuyau à relier un joint parallèle avec un joint gonflant intégré.
